# EUROPÄISCHE PATENTSCHRIFT

(11) **EP 2 563 625 B1**
(45) Veröffentlichungstag und Bekanntmachung des Hinweises auf die Patenterteilung: **28.10.2015**
(21) Anmeldenummer: 11708998.7
(22) Anmeldetag: 03.03.2011
(51) Int. Cl.: B60R 22/46

(54) **STRAFFERVORRICHTUNG FÜR EINEN SICHERHEITSGURT**
TENSIONING DEVICE FOR A SAFETY BELT
DISPOSITIF PRÉ-TENSIONNEUR POUR UNE CEINTURE DE SÉCURITÉ

(30) Priorität: 27.04.2010 DE 102010018512
(43) Veröffentlichungstag der Anmeldung: 06.03.2013
(73) Patentinhaber: Autoliv Development AB, 447 83 Vårgårda (SE)
(72) Erfinder: SCHMIDT, Thomas, 23669 Timmendorfer Strand (DE); SCHMIDT, Martin, 25337 Elmshorn (DE); FISCHER, Christian, 22297 Hamburg (DE); PECH, Michael, 22529 Hamburg (DE); STEINBERG, Matthias, 25368 Kiebitzreihe (DE); VOSS, Tobias, 25336 Klein Nordende (DE)
(74) Vertreter: Müller Verweyen
(86) Internationale Anmeldenummer: PCT/EP2011/001057
(87) Internationale Veröffentlichungsnummer: WO 2011/134567

(56) Entgegenhaltungen:
- DE-A1-102008 032 371

## Beschreibung

Die Erfindung betrifft eine Straffervorrichtung für einen Sicherheitsgurt, insbesondere in einem Kraftfahrzeug, nach dem Oberbegriff von Anspruch 1.

Grundsätzlich besteht bei Straffervorrichtungen der gattungsgemäßen Art das Problem, dass sich die Druckverhältnisse während des Straffvorgangs sehr stark ändern. Insbesondere sehr hohe Druckspitzen können dazu führen, dass Teile der Straffervorrichtung beschädigt werden oder der Bewegungsablauf der Straffervorrichtung gestört wird.

Aus der DE 195 45 795 C1 ist bereits eine pyrotechnische Antriebsvorrichtung mit einer Überdrucksicherung bekannt, durch die ein Überschreiten eines vorbestimmten Druckes in dem Rohr der Straffervorrichtung verhindert wird. Bei dieser Lösung ist in dem Rohr im Bereich des Gasgenerators eine Öffnung vorgesehen und der in dem Rohr angeordnete Gasgenerator mit einer Gasgeneratorhülse versehen. Bei einem Überschreiten eines vorbestimmten Druckes wird die Wandung der Gasgeneratorhülse in die Öffnung des Rohres hineingedrückt und verformt sich dabei so weit, dass sie selbst aufreißt und die Öffnung freigibt.

Ein Nachteil dieser Lösung ist, dass der Druck nach außen aus dem Rohr freigesetzt wird und dabei ein heißer Strahl oder sogar eine Stichflamme freigesetzt wird, wodurch benachbarte Teile beschädigt werden können.

Aus der DE 102 12 912 B4 ist z.B. eine Straffervorrichtung mit einer Kolben-Zylinderanordnung bekannt, bei der in dem Kolben eine Druckentlastungsöffnung vorgesehen ist, durch die ein Druckabbau aus der Druckkammer vor dem Kolben ermöglicht wird. Bei der dort beschriebenen Straffervorrichtung wird die Antriebsbewegung des Kolbens mittels einer Zahnstange übertragen, welche in ein mit der Gurtwelle verbundenes Zahnrad eingreift. Eine Freigabe des Druckes über die dort beschriebene Druckentlastungsöffnung setzt voraus, dass in Bewegungsrichtung der Antriebseinrichtung hinter dem Kolben ein Freiraum vorhanden ist, in den der Druck aus der Druckkammer entweichen kann.

Bei einer aus der DE 195 45 795 C1 bekannten Straffervorrichtung ist eine solche Lösung grundsätzlich nicht möglich, da die Antriebsvorrichtung zur Übertragung der Straffbewegung hier durch eine angetriebene Massekörperkette gebildet ist, welche mit einem ersten Massekörper unmittelbar an dem Kolben anliegt. Der für die aus der DE 102 12 912 B4 bekannte Lösung erforderliche Freiraum wird hier durch den ersten Massekörper zumindest eingeengt. Außerdem besteht der Nachteil, dass der erste Massekörper während der Antriebsbewegung des Kolbens mit einem sehr hohen Druck an dem Kolben anliegt und dadurch eine in dem Kolben vorhandene Öffnung verschließen würde.

Ferner ist aus der DE 10 2008 032 371 A1 ein Gurtstraffer mit einem zweiteiligen Kolben nach dem Oberbegriff von Anspruch 1 bekannt, welcher eine durch ein Einlegeteil verschlossene Durchgangsöffnung aufweist.

Aufgabe der Erfindung ist es, eine Straffervorrichtung mit einer durch einen Kolben antreibbaren Massekörperkette zu schaffen, bei der der Überdruck aus dem vor dem Kolben befindlichen Druckraum bei einem Überschreiten eines vorbestimmten Druckes ohne eine Gefährdung von Teilen in der Umgebung der Straffervorrichtung schlagartig gesenkt werden kann.

Die Aufgabe wird erfindungsgemäß durch eine Straffervorrichtung mit den Merkmalen des Anspruchs 1 gelöst. Weitere bevorzugte Ausführungsformen der Erfindung sind den Unteransprüchen, der Beschreibung und den zugehörigen Figuren zu entnehmen.

Erfindungsgemäß wird zur Lösung der Aufgabe vorgeschlagen, dass das Einlegeteil mit einem ringzylindrischen Fortsatz radial zwischen dem ersten und dem zweiten Teil eingespannt ist. Durch den ringzylindrischen Fortsatz kann das Einlegeteil in Radialrichtung fixiert werden. Außerdem kann das Einlegeteil dadurch derart gegen eine Verformung in Axialrichtung fixiert werden, so dass das Einlegeteil zum Freigeben der Öffnung nicht in einer Vorphase axial ausgebeult wird, sondern bei einer vorbestimmten durch die Auslegung des Einlegeteils definierten Druckdifferenz schlagartig ohne eine Vorverformung aufreißt.

Weiter wird vorgeschlagen, dass wenigstens zwei Vertiefungen in der Stirnfläche vorgesehen sind. Der Vorteil durch die Anordnung von zwei oder mehr Vertiefungen in der Stirnfläche besteht darin, dass die durch die Strömung des Druckgases bedingte auf den Massekörper wirkende Druckänderung vergleichmäßigt werden kann, so dass der Massekörper auch während der Druckfreisetzung nicht einseitig den Kontakt zu der Stirnfläche verliert und möglicherweise eine Kippbewegung ausführt.

Eine möglichst gleichmäßige Änderung der an dem Massekörper wirkenden Druckkräfte kann dabei dadurch erzielt werden, indem die Vertiefungen radialsymmetrisch und/oder identisch bemessen sind.

Insbesondere hat sich herausgestellt, dass ein gleichmäßiger und möglichst schneller Druckabbau dadurch erzielt werden kann, indem die Durchgangsöffnung mittig in der Stirnfläche angeordnet ist, und die Vertiefung ausgehend von der Durchgangsöffnung radial zu dem äußeren Rand des Kolbens verläuft.

Weiter wird vorgeschlagen, dass die Fläche der Vertiefung(en) in der Summe 15-50 % der Oberfläche der Gesamtoberfläche der Stirnfläche beträgt. Durch den vorgeschlagenen Anteil der Fläche der Vertiefungen von der Stirnfläche ist sichergestellt, dass der Druck schnell abgebaut wird und der Massekörper trotzdem über eine ausreichende Anlagefläche an der Stirnfläche des Kolbens anliegt, ohne dass die Gefahr besteht, dass der Teil der Stirnfläche, an der der Kolben anliegt, durch eine übermäßig hohe Belastung bei den wirkenden Temperaturen aufschmilzt oder zerstört wird. Der Anteil der Oberfläche der Vertiefungen bezieht sich dabei auf die Fläche der Stirnfläche des Kolbens, an der der erste Massekörper ohne Vertiefungen anliegen würde.

Eine besonders kostengünstige Lösung kann in diesem Fall dadurch verwirklicht sein, indem das zweite Teil durch ein metallisches Tiefziehteil gebildet ist. Das zweite Teil kann dadurch kostengünstig in einer Großserie hergestellt werden, wobei es dabei insbesondere von Vorteil ist, dass die Formgebung der Vertiefungen in dem Tiefziehverfahren gleich mit erfolgen kann.

Dieses schlagartige Aufreißen kann ferner dadurch bewirkt oder unterstützt werden, indem das erste und/oder das zweite Teil einen radial nach innen ragenden die Durchgangsöffnung verengenden Kragen aufweisen, an dem das Einlegeteil anliegt. Der Kragen wirkt bei einer Druckbelastung des Einlegeteils als Abscherkante, welche das Aufreißen des Einlegeteil durch das Erzeugen entsprechender Scherkräfte in dem Einlegeteil begünstigt.

In diesem Fall wird weiter vorgeschlagen, dass der Kragen an dem zweiten Teil angeordnet ist, und dass das Einlegeteil an der dem Druckraum zugewandten Seite des zweiten Teils anliegt und bei einem Überschreiten eines vorbestimmten Druckes in dem Druckraum an dem Kragen abschert. Da das zweite Teil eine höhere Festigkeit als das erste Teil des Kolbens aufweist, und sich das zweite Teil mit der Stirnfläche an dem Massekörper abstützt, wird die auf das Einlegeteil wirkende Druckkraft über das zweite Teil auf den Massekörper übertragen. Da das zweite Teil und der Massekörper bereits aufgrund ihrer Funktion der Übertragung der Strafferantriebsleistung bereits entsprechend fest und formstabil ausgelegt sind, stützt sich das Einlegeteil damit an einer besonders formstabilen Baugruppe ab und reißt bei einem Überschreiten der vorbestimmten Druckdifferenz sicher auf, ohne dass der Zeitpunkt des Aufreißens von einer Verformung dieser Baugruppe abhängt.

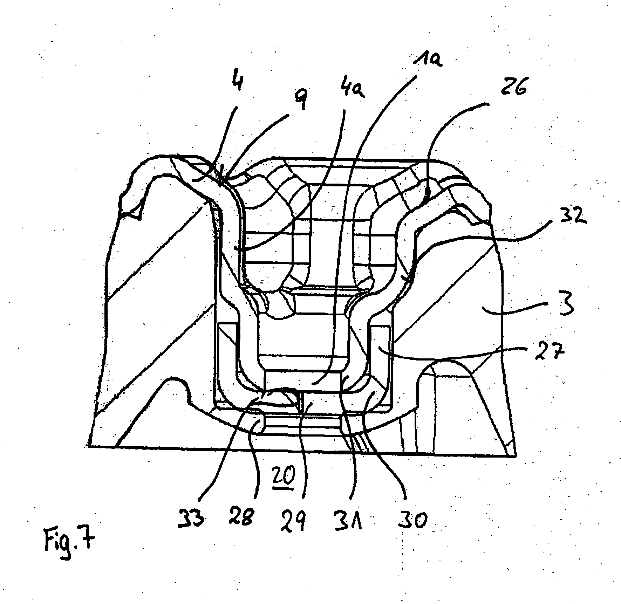

Nachfolgend werden Ausführungsbeispiele erläutert, wobei die Erfindung in Figur 7 dargestellt ist. In den Figuren sind im Einzelnen zu erkennen:
- Fig.1:: An einen Gurtaufroller angekoppelte Straffervorrichtung mit einem in einem Rohr geführten Kolben;
- Fig.2:: Kolben mit vier Vertiefungen in der Stirnfläche in isometrischer Ansicht;
- Fig.3:: Kolben aus Fig.2 in Blickrichtung auf die Stirnfläche;
- Fig.4:: Kolben mit drei Vertiefungen in der Stirnfläche in isometrischer Ansicht;
- Fig.5:: Kolben aus Fig.4 in Querschnittsdarstellung;
- Fig.6:: zweiteiliger Kolben mit anliegendem Massekörper in einem Rohr einer Sträffervorrichtung.
- Fig.7:: Zweiteiliger Kolben mit einem zwischen den Teilen des Kolbens vorgesehenen Einlegeteil;

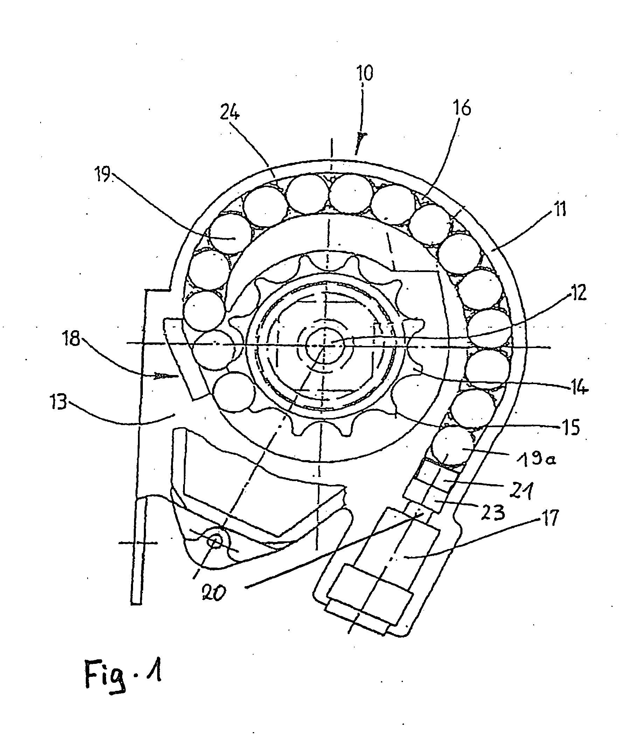

Der in Fig. 1 schematisch gezeigte Gurtaufroller umfasst ein Gehäuse 11 mit Seitenschenkel 13, eine darin gelagerte Gurtaufwickelwelle 12 für ein nicht dargestelltes Sicherheitsgurtband und eine nach Auslösung auf die Gurtaufwickelwelle 12 einwirkende Straffervorrichtung 10. Die Straffervorrichtung 10 umfasst ein mit der Gurtaufwickelwelle 12 drehfest verbundenes Antriebsrad 14, das beispielsweise eine Außenverzahnung 15 aufweist, einen insbesondere pyrotechnischen Gasgenerator 17 zur Erzeugung eines Gasdrucks, und ein den Gasgenerator 17 mit der Gurtaufwickelwelle 12 über das Antriebsrad 14 verbindendes Rohr 16. Das Rohr 16 wird von einer Rohrwand 24 gebildet, die Teil des Gehäuses 11 oder alternativ auch ein separates Bauteil sein kann.

In dem Rohr 16 ist eine Reihe von metallischen kugelförmigen Massekörpern 19 zur Übertragung der durch den von dem Gasgenerator 17 erzeugten Gasdruck bewirkten Straffbewegung auf die Gurtaufwickelwelle 12 über das Antriebsrad 14 vorgesehen. Der Gurtaufroller ist hinsichtlich der Ausgestaltung des Wechselwirkungsbereichs 18 zwischen der Massekörperreihe 19 und dem Antriebsrad 14 sowie etwaiger Kupplungseinrichtungen zwischen dem Antriebsrad 14 und der Gurtaufwickelwelle 12 nicht beschränkt. Zur reibungsarmen Kraftübertragung ist der Außendurchmesser der Massekörper 19 zweckmäßigerweise etwas geringer als der Innendurchmesser des Rohres 16.

In dem Rohr 16 ist weiterhin ein in Fig. 1 nur schematisch angedeuteter Kolben 21 vorgesehen, der zweckmäßigerweise in einem Bereich 23 zwischen dem Gasgenerator 17 und der Massekörperreihe 19, das heißt unmittelbar vor dem in Kraftübertragungsrichtung ersten Massekörper 19a der Massekörperreihe 19 angeordnet ist. Der Kolben 21 schließt einen durch den Gasgenerator 17 mit einem Gasdruck beaufschlagbaren Druckraum 20 in dem Rohr 16 ab, so dass der Kolben 21 bei einer Druckbeaufschlagung des Druckraumes 20 durch den Gasgenerator 17 zu einer Straffbewegung antreibbar ist. Die Straffbewegung des Kolbens 21 wird durch die Kraftübertragungseinrichtung, gebildet durch die Massekörper 19 und das Antriebsrad 14, auf die Gurtaufwickelwelle 12 übertragen, so dass das Gurtband gestrafft wird.

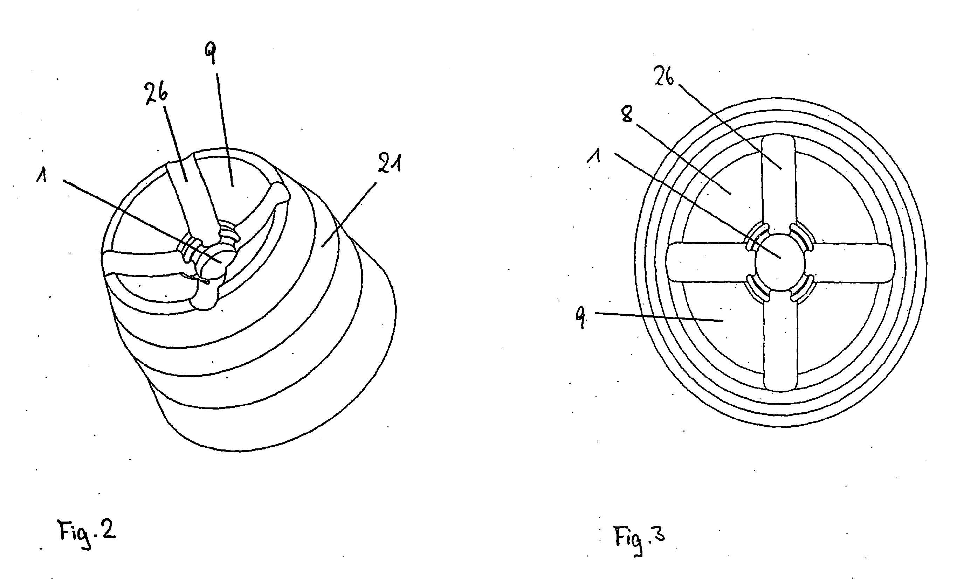

In den Fig.2 und 3 ist ein Ausführungsbeispiel eines Kolbens 21 mit vier radialsymmetrischen in einem Winkel von 90 Grad zueinander angeordneten Vertiefungen 26 zu erkennen. Die Vertiefungen 26 erstrecken sich geradlinig von einer mittig angeordneten Durchgangsöffnung 1 zu dem radial äußeren Rand des Kolbens 21.

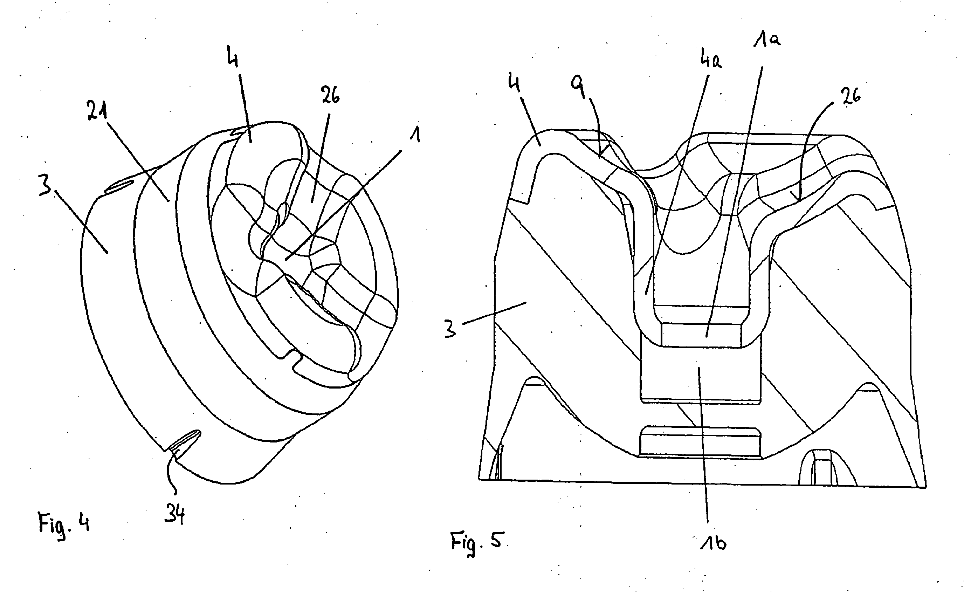

In den Fig.4 und 5 ist eine alternative Ausführungsform des Kolbens 21 zu erkennen, bei der der Kolben 21 zweiteilig aus einem ersten Teil 3 und einem zweiten Teil 4 zusammengesetzt ist. Das erste Teil 3 ist z.B. aus einem elastischen Kunststoff, wie z.B. POM, hergestellt und bildet den Grundkörper des Kolbens 21, während das zweite Teil 4 als metallisches Tiefziehteil ausgebildet ist und die Stirnfläche 9 des Kolbens 21 bildet. Das zweite Teil 4 ist in dem Tiefziehverfahren mittig zu einem zylindrischen Abschnitt 4a geformt und mit diesem in die Durchgangsöffnung 1 eingepresst. Ferner sind in die Stirnfläche 9 drei Vertiefungen 26 eingeprägt, welche in einem Winkel von 120 Grad zueinander angeordnet sind und ebenfalls in die mittige Durchgangsöffnung 1 münden.

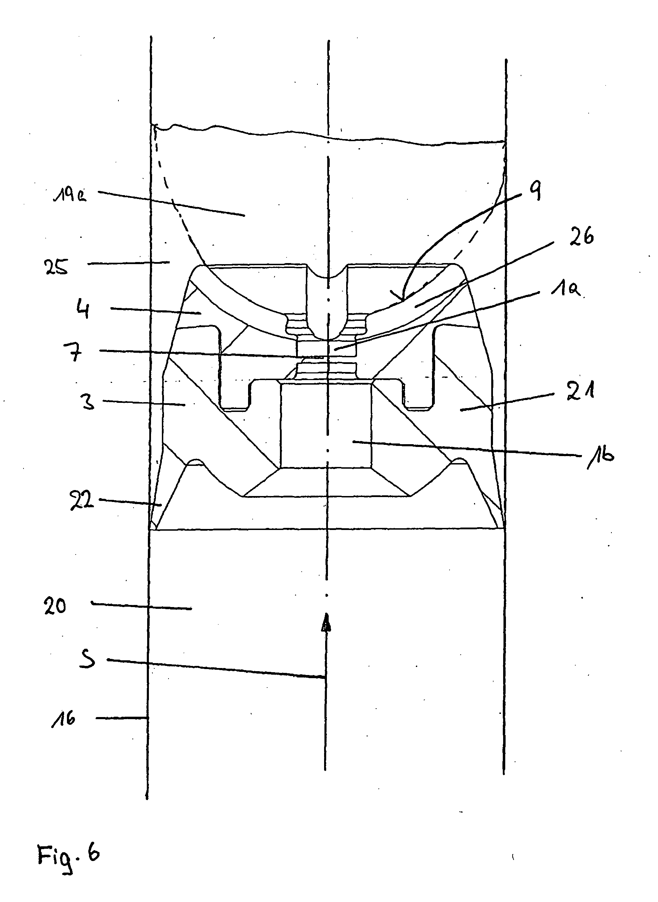

In der Fig.6 ist eine weitere Ausführungsform eines Kolbens 21 zu erkennen, welche in einem Rohr 16 mit einem anliegenden Massekörper 19a dargestellt ist. Der Kolben 21 ist auch in diesem Ausführungsbeispiel zweiteilig mit einem ersten Teil 3 und einem zweiten Teil 4 ausgebildet. Das erste Teil 3 ist mit einer Dichtlippe 22 versehen, welche zur Abdichtung des Druckraumes 20 an der Innenwand des Rohres 16 anliegt. Das zweite Teil 4 ist an der dem Massekörper 19a zugewandten Seite des ersten Teils 3 mit diesem verbunden und bildet die Stirnfläche 9 des Kolbens 21, an der der Massekörper 19a anliegt. In der Stirnfläche 9 des Kolbens 21 sind Vertiefungen 26 vorgesehen, welche sich von der Durchgangsöffnung 1 zu dem radial äußeren Rand des Kolbens 21 erstrecken. Das zweite Teil 4 weist eine höhere Oberflächenhärte und Festigkeit als das erste Teil 3 auf, so dass sich die Oberfläche des Kobens 21 im Bereich der Stirnfläche 9 durch die während der Straffbewegung wirkenden Kräfte nicht verformt und die Vertiefungen 26 dadurch zusammengedrückt werden können. Das erste Teil 3 ist bewusst aus einem Werkstoff geringerer Festigkeit und Oberflächenhärte gebildet, so dass die Dichtlippe 22 entsprechend verformungsfähig ist und während der Straffbewegung auch bei geringfügigen seitlichen Bewegungen des Kolbens 21 oder in einem gekrümmten Rohrverlauf dichtend an der Innenwandung des Rohres 16 anliegt.

Die Durchgangsöffnung 1 ist, wie auch in den Fig. 5 und 6 zu erkennen ist, gebildet durch einen Abschnitt 1a und einen Abschnitt 1b, wobei der Abschnitt 1b in der Ausführungsform in Fig.5 und der Abschnitt 1a in der in Fig.6 dargestellten Ausführungsform jeweils mittels eines Steges 7 verschlossen ist. Bei einem Überschreiten eines durch die Wandstärke und das Material des Steges 7 vorbestimmten Druckes in dem Druckraum 20 reißt dieser auf und gibt daraufhin die Durchgangsöffnung 1 frei.

Nach dem Aufreißen des Steges 7 kann der Druck aus dem Druckraum 20 über die Durchgangsöffnung 1 und die Vertiefungen 26 in einen in Richtung der Straffbewegung S hinter dem Kolben 21 befindlichen Raum 25 entweichen, ohne dass es dazu erforderlich ist, dass zwischen dem Massekörper 19a und der Stirnfläche 9 ein Spalt vorhanden ist. Die Überdrucksicherung ist damit auch unter Volllast der Straffervorrichtung funktionssicher.

In der Figur 7 ist erfindungsgemäß des Kolben 21 mit zwei Teilen 3 und 4 zu erkennen, zwischen denen ein Einlegeteil 30 vorgesehen ist, welches als Topf mit einem ringzylindrischen Fortsatz 27 und einem die Durchgangsöffnung 1 verschließenden Aufreißabschnitt 29 gebildet ist. Das Einlegeteil 30 ist mit dem ringzylindrischen Fortsatz 27 in Radialrichtung zwischen dem ersten Teil 3 und dem zweiten Teil 4 und in Axialrichtung zwischen zwei die Durchgangsöffnung verengenden Kragen 28 und 31 des ersten und des zweiten Teils 3 und 4 eingespannt. Das Einlegeteil 30 ist damit sowohl in Axial- als auch in Radialrichtung fest zwischen den Teilen 3 und 4 eingespannt. Der Kragen 28 wirkt aufgrund der Bemessung und der Verwendung von Kunststoff als Werkstoff als Feder, so dass der Kragen 28 beim Einführen des Einlegeteils 30 und des zweiten Teils 4 geringfügig nachgeben kann, ohne dabei selbst zerstört oder beschädigt zu werden.

Bei einem Ansteigen des Druckes in dem Druckraum 20 und einem daraus resultierenden Überschreiten einer vorbestimmten Druckdifferenz der an den unterschiedlichen Seiten des Einlegeteils 30 anliegenden Drücke reißt das Einlegeteil 30 im Bereich des Aufreißabschnittes 29 auf, wobei das Aufreißen an der Kante des Kragens 31 beginnt, welche in diesem Fall als Abscherkante wirkt. Da das Einlegeteil 30 mit dem ringzylindrischen Fortsatz radial zwischen den Teilen 3 und 4 eingespannt ist, wird dabei die Verformung des Einlegeteils 30, und insbesondere die Verformung des Aufreißabschnittes 29, in Axialrichtung begrenzt. Das Aufreißen des Einlegeteils 30 beginnt an einer an der Kante des Kragens 31 anliegenden Stelle des Aufreißabschnittes 29, welcher dann im weiteren Verlauf entlang der Kante des Kragens 31 in Umfangsrichtung abschert.

Das Einlegeteil 30 stützt sich dabei an dem zweiten Teil 4 ab, welches die höhere Festigkeit aufweist und sich mit der Stirnfläche 9 an dem Massekörper 19a abstützt. Durch das zweite Teil 4 findet das Einlegeteil 30 eine entsprechende mechanische Unterstützung, so dass die an dem Einlegeteil 30 anliegende Druckdifferenz gezielt zu einem Aufreißen des Einlegeteils 30 führt, ohne dass sich das zweite Teil 4 dabei vorher nennenswert verformt und der Zeitpunkt des Aufreißens dadurch beeinflusst wird. Sowohl das zweite Teil 4 als auch das Einlegeteil 30 können als metallische Tiefziehteile ausgeführt sein. In jedem Fall sollte das zweite Teil 4 eine durch die Formgebung oder durch die Werkstoffwahl erzielte höhere Formfestigkeit als das Einlegeteil 30 aufweisen, damit das Einlegeteil 30 bei der vorbestimmten Druckdifferenz aufreißt.

Das Einlegeteil 30 weist einen geringfügig kleineren Außendurchmesser als der Innendurchmesser der Durchgangsöffnung 1 in dem erste Teil 3 auf, so dass das Einlegeteil 30 mit einer Spielpassung in der Durchgangsöffnung 1 aufgenommen ist und dadurch keine Radialkräfte auf das erste Teil 3 ausübt. Ferner ist an dem ersten Teil 3 eine Abstützfläche 32 gebildet, an der das zweite Teil 4 in Axialrichtung des Kolbens 21 formschlüssig im Bereich der Vertiefungen 26 zu Anlage gelangt, so dass dadurch die Sollposition des zweiten Teils 4 gegenüber dem ersten Teil 3 festgelegt ist und der Druck auf das Einlegeteil 30 begrenzt ist.

Ferner ist in dem Einlegeteil 30 im Bereich des Aufreißabschnittes 29 eine Mikrobohrung 33 mit einer Weite von ca 0,1 mm vorgesehen. Die Mikrobohrung 33 ermöglicht einen Druckausgleich zwischen dem Druckraum 20 und dem hinter dem Kolben 21 befindlichen Raum 25, ohne dass der Aufreißabschnitt 29 dazu aufreißen muss. Ein solcher Druckausgleich ist z.B. dann sinnvoll, wenn der Gurtstraffer aktiviert wurde, und der Druck anschließend zur weiteren Handhabung des Gurtaufrollers entweichen soll. Durch die Anordnung der Mikrobohrung 33 kann auf die in der Fig.4 dargestellten Nuten 34 in der Mantelfläche des Kolbens 21 verzichtet werden. Ferner kann das Aufreißen des Aufreißabschnitts 29 durch die Mikrobohrung 33 begünstigt werden.

Durch die Mikrobohrung 29 kann außerdem eine Bewegung des Kolbens 21 entgegen der Straffbewegung und entgegen dem in dem Druckraum 20 noch anstehenden Druck zu Beginn der Kraftbegrenzungsbewegung ermöglicht werden. Jedenfalls ist durch die Mikrobohrung 33 ein Druckausgleich zwischen dem Druckraum 20 und dem Raum 25 möglich, ohne dass dazu der Aufreißabschnitt 29 aufgerissen werden muss, also unabhängig von einem Überschreiten einer vorgegebenen Druckdifferenz zwischen dem Druck in dem Raum 25 und dem Druckraum 20.

## Patentansprüche

1. Straffervorrichtung (10) für einen Sicherheitsgurt, insbesondere in einem Kraftfahrzeug, umfassend einen Gasgenerator (17), einen in einem Rohr (16) geführten Kolben (21), der einen Druckraum (20) in dem Rohr (16) verschließt, der durch den Gasgenerator (17) mit einem Druck beaufschlagbar ist, wodurch der Kolben (21) zu einer Straffbewegung antreibbar ist, welche mittels eines an einer Stirnfläche (9) des Kolbens (21) anliegenden Massekörpers (19a) auf den Sicherheitsgurt übertragbar ist, wobei der Kolben (21) eine bei einem Überschreiten eines vorbestimmten Druckes freigebbare Durchgangsöffnung (1) aufweist, und in der Stirnfläche (9) eine Vertiefung (26) vorgesehen ist, durch die bei anliegendem Massekörper (19a) eine Strömungsverbindung von der Durchgangsöffnung (1) zu dem in Richtung der Straffbewegung (S) hinter dem Kolben (21) befindlichen Raum (25) geschaffen ist, wobei der Kolben (21) im Bereich der Stirnfläche (9) eine gegenüber der übrigen Oberfläche höhere Oberflächenhärte aufweist, wobei der Kolben (21) wenigstens zweiteilig ausgebildet ist, und ein erstes Teil (3) aufweist, welches an der Innenwandung des Rohres (16) anliegt, und ein zweites Teil (4) aufweist, an dem die Stirnfläche (9) angeordnet ist, und das zweite Teil (4) eine höhere Festigkeit als das erste Teil (3) aufweist, und zwischen dem ersten und dem zweiten Teil (3,4) ein die Durchgangsöffnung (1) verschließendes Einlegeteil (30) vorgesehen ist, **dadurch gekennzeichnet, dass** das Einlegeteil (30) mit einem ringzylindrischen Fortsatz (27) radial zwischen dem ersten und dem zweiten Teil (3,4) eingespannt ist.

2. Straffervorrichtung nach Anspruch 1, **dadurch gekennzeichnet, dass** wenigstens zwei Vertiefungen (26) in der Stirnfläche (9) vorgesehen sind.

3. Straffervorrichtung nach Anspruch 2, **dadurch gekennzeichnet, dass** die Vertiefungen (26) radialsymmetrisch angeordnet sind.

4. Straffervorrichtung nach Anspruch 2 oder 3, **dadurch gekennzeichnet, dass** die Vertiefungen (26) identisch bemessen sind.

5. Straffervorrichtung nach einem der vorangegangenen Ansprüche, **dadurch gekennzeichnet, dass** die Durchgangsöffnung (1) mittig in der Stirnfläche (9) angeordnet ist, und die Vertiefung (26) ausgehend von der Durchgangsöffnung (1) radial zu dem äußeren Rand des Kolbens (21) verläuft.

6. Straffervorrichtung nach einem der vorangegangenen Ansprüche, **dadurch gekennzeichnet, dass** die Fläche der Vertiefung(en) (26) in der Summe 15-50 % der Stirnfläche (9) beträgt.

7. Straffervorrichtung nach einem der vorangegangenen Ansprüche, **dadurch gekennzeichnet, dass** das zweite Teil (4) durch ein metallisches Tiefziehteil gebildet ist.

8. Straffervorrichtung nach einem der vorangegangenen Ansprüche, **dadurch gekennzeichnet, dass** das erste und/oder das zweite Teil (3,4) einen radial nach innen ragenden die Durchgangsöffnung (1) verengenden Kragen (28,31) aufweisen, an dem das Einlegeteil (30) anliegt.

9. Straffervorrichtung nach Anspruch 8, **dadurch gekennzeichnet, dass** der Kragen (31) an dem zweiten Teil (4) angeordnet ist, und dass das Einlegeteil (30) an der dem Druckraum (20) zugewandten Seite des zweiten Teils (4) anliegt und bei einem Überschreiten eines vorbestimmten Druckes in dem Druckraum (20) an dem Kragen (31) abschert.

## Claims

1. A tensioning device (10) for a seatbelt, in particular in a motor vehicle, comprising a gas generator (17), a piston (21) guided in a tube (16), which encloses a pressure space (20) in the tube (16), which is impingeable with a pressure by the gas generator (17), whereby the piston (21) is drivable to a tensioning movement, which is transferable to the seatbelt by a mass body (19a) abutting on an end surface (9) of the piston (21), wherein the piston (21) has a through-opening (1) which is releasable upon an exceeding of a predetermined pressure, and a recess (26) is provided in the end surface (9), through which recess (26), in the case of abutting mass body (19a), a fluid connection is provided from the through-opening (1) to the space (25) located behind the piston (21) in the direction of the tensioning movement (S), wherein the piston (21) has a greater surface hardness in the region of the end surface (9) with respect to the rest of the surface, and includes a first part (3) which abuts on the inner wall of the tube (16), and includes a second part (4), on which the end surface (9) is disposed, and the second part (4) has a greater strength than the first part (3), and an inlay part (30) closing the through-opening (1) is disposed between the first and the second part (3, 4), **characterised in that** the inlay part (30) is radially tensioned between the first and the second part (3, 4) by an annular-cylindrical extension (27).

2. The tensioning device according to claim 1, **characterised in that** at least two recesses (26) are provided in the end surface (9).

3. The tensioning device according to claim 2, **characterised in that** the recesses (26) are disposed radially symmetric.

4. The tensioning device according to claim 2 or 3, **characterised in that** the recesses (26) are identically dimensioned.

5. The tensioning device according to one of the preceding claims, **characterised in that** the through-opening (1) is disposed centrally in the end surface (9), and starting from the through-opening (1) the recess (26) extends radially to the outer edge of the piston (21).

6. The tensioning device according to one of the preceding claims, **characterised in that** the surface of the recess(es) (26) sum up to 15-50% of the end surface (9).

7. The tensioning device according to one of the preceding claims, **characterised in that** the second part (4) is formed by a metallic deep-drawn part.

8. The tensioning device according to one of the preceding claims, **characterised in that** the first and/or the second part (3, 4) include a radially-inwardprotruding collar (28, 31) narrowing the through-opening (1), on which collar (28, 31) the inlay part (30) abuts.

9. The tensioning device according to claim 8, **characterised in that** the collar (31) is disposed on the second part, and **that** the inlay part (30) abuts on the side of the second part (4) facing towards the pressure space (20) and shears the collar (31) upon an exceeding of a predetermined pressure in the pressure space (20).

## Revendications

1. Dispositif prétensionneur (10) pour une ceinture de sécurité, notamment dans un véhicule à moteur, comprenant un générateur de gaz (17), un piston (21) guidé dans un tube (16) et fermant une chambre de compression (20) dans le tube (16) qui peut être alimentée en pression par le générateur de gaz (17), moyennant laquelle le piston (21) peut être entraîné dans un mouvement de prétension pouvant être transféré à la ceinture de sécurité par un corps de masse (19a) qui se trouve sur une face frontale (9) du piston (21), ledit piston (21) présentant une ouverture de passage (1) qui se dégage lorsqu'une pression donnée est dépassée, et qui présente aussi une cavité (26) prévue dans la face frontale (9), laquelle cavité permet de créer une liaison fluidique allant de l'ouverture de passage (1) à l'espace (25) situé derrière le piston (21) dans la direction du mouvement de prétension (S), le piston (21) présentant, dans la zone de la face frontale (9), une dureté de surface supérieure au reste de la surface, le piston (21) étant constitué d'au moins deux parties et présentant une première partie (3) se trouvant sur la paroi intérieure du tube (16) et une deuxième partie (4) sur laquelle est disposée la face frontale (9) ; la deuxième partie (4) présentant une résistance plus élevée que la première partie (3) et une pièce d'insertion (30) obturant l'ouverture de passage (1) étant prévue entre la première et la deuxième partie (3, 4), **caractérisé en ce que** la pièce d'insertion (30) est contrainte radialement par un prolongement (27) cylindrique entre la première et la deuxième partie (3, 4).

2. Dispositif prétensionneur selon la revendication 1, **caractérisé en ce qu'**au moins deux cavités (26) sont prévues dans la face frontale (9).

3. Dispositif prétensionneur selon la revendication 2, **caractérisé en ce que** les cavités (26) sont disposées en symétrie radiale.

4. Dispositif prétensionneur selon la revendication 2 ou 3, **caractérisé en ce que** les cavités (26) sont de mêmes dimensions.

5. Dispositif prétensionneur selon l'une quelconque des revendications précédentes, **caractérisé en ce que** l'ouverture de passage (1) se trouve au centre de la face frontale (9) et **en ce que** la cavité (26) s'étend radialement vers le bord extérieur du piston (21) en partant de l'ouverture de passage (1).

6. Dispositif prétensionneur selon l'une quelconque des revendications précédentes, **caractérisé en ce que** la surface de la ou des cavités (26) représente au total 15 à 50 % de la face frontale (9).

7. Dispositif prétensionneur selon l'une quelconque des revendications précédentes, **caractérisé en ce que** la deuxième partie (4) est constituée par une pièce emboutie métallique.

8. Dispositif prétensionneur selon l'une quelconque des revendications précédentes, **caractérisé en ce que** la première et/ou la deuxième partie (3, 4) présentent un collier (28, 31) qui fait radialement saillie vers l'intérieur, rétrécissant l'ouverture de passage (1), et sur lequel se trouve la pièce d'insertion (30).

9. Dispositif prétensionneur selon la revendication 8, **caractérisé en ce que** le collier (31) est disposé sur la deuxième partie (4) et **en ce que** la pièce d'insertion (30) se trouve sur le côté de la deuxième partie (4) faisant face à la chambre de compression (20) et crée un cisaillement au niveau du collier (31) si une pression prédéfinie est dépassée dans la chambre de compression (20).
